# EUROPÄISCHE PATENTANMELDUNG

(11) **EP 1 008 473 A2**
(43) Veröffentlichungstag der Anmeldung: **14.06.2000**
(21) Anmeldenummer: 99124181.1
(22) Anmeldetag: 03.12.1999
(51) Int. Cl.: B60H 1/34

(54) **Luftdüse für Kraftfahrzeuge**

(30) Priorität: 11.12.1998 DE 19857153
(71) Anmelder: ADAM OPEL AG, 65423 Rüsselsheim (DE)
(72) Erfinder: Mertens, Werner, Dipl.-Ing., 52538 Gangelt (DE); Bott, Guido, Dipl.-Ing., 65468 Trebur (DE)
(74) Vertreter: Kümpfel, Heinz, Dipl.-Ing.

(57) **Zusammenfassung**

Die Erfindung bezieht sich auf eine Düse für Heizungs-/Belüftungs- und/oder Klimaanlagen von Kraftfahrzeugen, mit einem eine Luftaustrittsöffnung (2) bildenden Gehäuse (1), indem über eine Koppelstange (7) miteinander gelenkig verbundene Lamellen (3, 4) gelagert sind, und mit einem als Bedienrad (13) ausgeführten, gehäusefest gelagerten Bedienelement zur Verstellung der Neigung der Lamellen (3, 4), wobei in dem Bedienrad (13) zwei Kulissenführungen (14, 15) angeordnet sind, in denen jeweils einer von zwei fest an der Koppelstange (7) angeordneten Führungszapfen (16, 17) geführt ist.

## Beschreibung

Die Erfindung bezieht sich auf eine Düse mit den im Oberbegriff des Patentanspruchs angegebenen Merkmalen, wie sie aus der DE 92 08 225 U1 bekannt und auch in der EP 0 782 939 A2 beschrieben ist.

In einem eine Luftauslaßöffnung bildenden Gehäuse sind Lamellen verschwenkbar gelagert. Sie sind nach Art einer Jalousie parallel zueinander angeordnet und über eine Koppelstange miteinander verbunden. Ihre Bewegung kann somit nur synchron erfolgen (Prinzip einer Parallelkurbel). Des weiteren ist ein gehäusefest gelagertes Bedienrad zur Verstellung der Neigung der Lamellen vorgesehen.

In EP 0 782 939 A2 ist ein Zapfen der Koppelstange (der dort auch gleichzeitig ein Zapfen einer Lamelle ist) in einer Kulissenführung des Bedienrades geführt. Dort sind die Lamellen um etwas mehr als 90° verstellbar, wobei diese Verstellung bei extrem geringer Drehung des Bedienrades erfolgt. Das Bedienrad ist nur um ca. 35° verdrehbar, so daß eine Feineinstellung der Lamellen während der Fahrt sehr schwierig ist. Befinden sich die Lamellen in ihrer vollständig geschlossenen Position, ist die Stellung des Führungszapfens in der Führungsbahn nicht exakt definiert. Die Lamellen können ohne Betätigung des Bedienrades ihre Position verlassen.

In DE 92 08 225 U1 ist mit dem Bedienrad ein achsgleich gelagertes Kulissenrad mit einer Kulissenführung verbunden. Auch hier ist die Position eines in der Kulissenbahn laufenden Führungszapfens in zumindest einer Position der Lamellen undefiniert und der volle Verstellwinkel der Lamellen ist über eine verhältnismäßige geringe Drehbewegung am Bedienrad zu realisieren.

Es ist Aufgabe der Erfindung, eine einfach aufgebaute Düse der genannten Art zu schaffen, deren Lamellen in allen Schwenkpositionen sicher gehalten sind und bei der eine gute Feineinstellung der Lamellen über einen großen Schwenkbereich möglich ist.

Zur Lösung dieser Aufgabe zeichnet sich die erfindungsgemäße Düse durch die im Patentanspruch 1 angegebenen Merkmale aus. Einzelheiten der Erfindung ergeben sich aus den Patentansprüchen 2 bis 4.

Es werden zwei Kulissenführungen direkt im Bedienrad angeordnet. In jeder dieser Führungen läuft ein Führungszapfen der Koppelstange, wenn das Bedienrad verdreht wird. So werden die Bewegungen der Lamellen nicht wie bekannt durch nur einen Kurvengetriebemechanismus bestimmt, sondern es kommen zwei derartige Mechanismen zur Anwendung, wobei beide Kulissen die gleiche Lamellenbewegung bewirken. Diese Kulissen sind vorzugsweise zueinander verdreht am Bedienrad angeordnet, so daß Punkte, an denen die Bewegung der Führungszapfen undefiniert erfolgen könnte, ebenfalls zueinander versetzt sind. Zumindest ein Führungszapfen bestimmt die Position der Lamellen immer exakt, womit die Funktion der Lamellen nahezu spielfrei gegeben ist.

Bei dieser Art der Kulissengestaltung können die Lamellen innerhalb eines großen Schwenkbereiches verstellt werden. Sie können aus einer geschlossen Position (0°-Stellung) über mehr als 135° verschwenkbar sein, womit die Strömungsrichtung der aus der Düse austretenden Luft in gewünschter Weise beeinflußbar ist. Diese Lamellenbewegung kann durch Verdrehen des Bedienrades über einen großen Winkel, insbesondere einen Winkel der größer ist, als der Schwenkwinkel der Lamellen, erreicht werden. Somit ist eine sehr feine Einstellung der Lamellenposition auch während der Fahrt (bei Vibrationen und Erschütterungen) möglich.

Details der Erfindung ergeben sich aus der folgenden Beschreibung eines Ausführungsbeispiels. Von den zugehörigen Figuren zeigt:
- Fig. 1:: den Grundaufbau einer Düse gemäß der Erfindung in schematischer Darstellungsweise;
- Fig. 2 bis 6:: den Verstellmechanismus für die Lamellen der Düse nach Fig. 1 in unterschiedlichen Positionen.

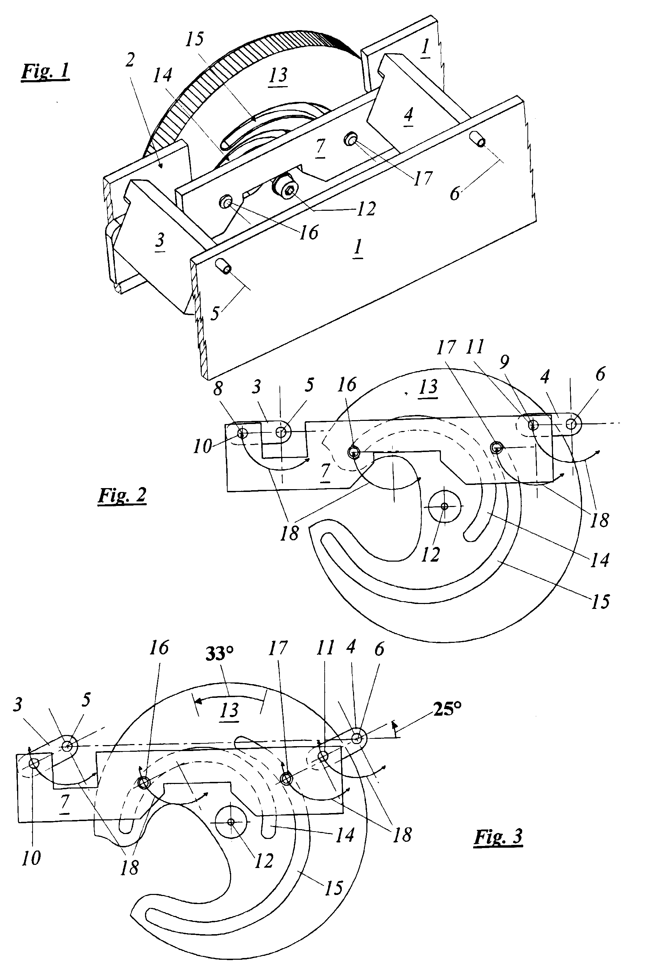

Die in Fig. 1 äußerst schematisch gezeigte Luftdüse einer Heizungs-/Belüftungs- und/oder Klimaanlage eines Kraftfahrzeugs besteht aus einem Gehäuse 1, welches eine Luftauslaßöffnung 2 bildet und mit dem Ende eines nicht gezeigten Luftkanals zu verbinden ist. Im Gehäuse 1 ist eine Vielzahl von Lamellen 3, 4 um Achsen 5, 6 verschwenkbar gelagert, wobei nur zwei dieser Lamellen 3, 4 in der Figur gezeigt sind. Die Lamellen 3, 4 sind mittels einer Koppelstange 7 nach Art einer Parallelkurbel gelenkig miteinander verbunden, was aus den Figuren 2 bis 6 deutlicher hervorgeht als aus Figur 1. Jeweils ein eine Achse 8, 9 bildender Zapfen 10, 11 der Lamellen 3, 4 ist in der Koppelstange 7 gelagert. Bei dieser an sich bekannten Anordnung werden durch Bewegung der Koppelstange 7 (oder einer Lamelle 3, 4) alle Lamellen 3, 4 mitbewegt, wobei sie ständig parallel zueinander ausgerichtet sind.

Zur Bewegung der Lamellen 3, 4 ist ein gehäusefest um eine Achse 12 verdrehbar gelagertes Bedienrad 13 vorgesehen. In die der Düse zugewandte Seite des Bedienrades 13 sind zwei Kulissenbahnen 14, 15 eingearbeitet. In jeder dieser Kulissenbahnen 14, 15 läuft ein Führungszapfen 16, 17 der Koppelstange 7. Bei anderer Ausführung der Erfindung könnten die Führungszapfen 16, 17 auch von verlängerten Zapfen 10, 11 der Lamellen 3, 4 gebildet werden.

Die durch besondere Vorteile gekennzeichnete Kinematik der wie oben beschriebenen Luftdüsen-Lamellen 3, 4 wird im folgenden anhand der Figuren 2 bis 6 beschrieben. Auch in diesen Figuren sind nur zwei Lamellen 3, 4 dargestellt, wobei jedoch weitere Lamellen vorgesehen sind. In Figur 2 befinden sich die Lamellen 3,4 in einer vollständig geschlossenen Endposition, so daß sie den Luftauslaß 2 verschließen. Dabei befinden sich auch die Führungszapfen 16, 17 am Ende ihrer jeweiligen Kulissenbahn 14, 15. Der mögliche Schwenkbereich der Lamellen 3,4 und der Koppelstange 7 mit den Führungszapfen 16, 17 ist jeweils durch Pfeile 18 verdeutlicht. Wäre nur der Führungszapfen 17 vorhanden, hätten die Lamellen 3, 4 keinen sicheren Halt in der Position nach Figur 2. Sie könnten durch Vibrationen nach unten verschwenken, ohne daß eine Betätigung am Bedienrad 13 erfolgt. Der Führungszapfen 16 hält die Lamellen 3, 4 jedoch sicher in der in Figur 2 gezeigten Position.

In Figur 3 ist eine um 25° verschwenkte Lamellenposition gezeigt, die erreicht wurde, indem das Bedienrad 13 um etwa 33° verdreht wurde. In dieser Position kann sich der Führungszapfen 17 relativ frei in der Kulissenbahn 15 nach oben und unten bewegen. Die Lamellen 3, 4 werden jedoch weiterhin sicher vom Führungszapfen 16 gehalten.

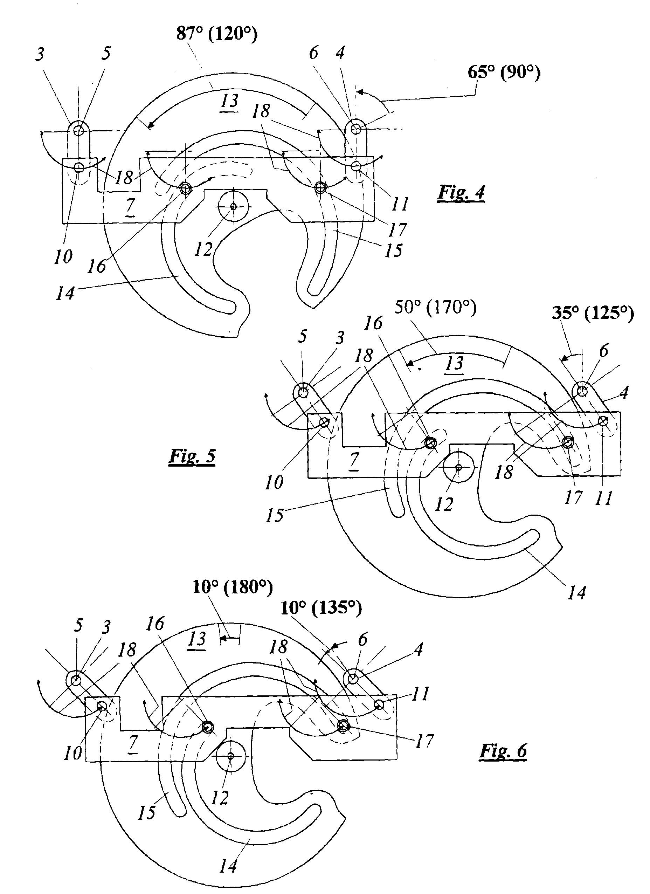

In Figur 4 ist eine 90°-Stellung der Lamellen 3, 4 gezeigt die erreicht wurde, indem das Bedienrad 13 um etwa 87° gegenüber der Stellung in Figur 3 bzw. um 120° gegenüber der Stellung in Figur 2 verdreht wurde. Bei Betrachtung der Pfeile 18 wird deutlich, daß die Lamellen 3, 4 durch beide Führungszapfen 16, 17 sicher gehalten werden, da diese sich nicht frei innerhalb der Kulissenbahnen 14, 15 bewegen können.

In Figur 5 ist eine Lamellenposition gezeigt, die erreicht wurde, indem das Bedienrad 13 um weitere 50° (170° ausgehend von Figur 2) verdreht wurde. Dabei bewegen sich die Lamellen 3, 4 um 35° weiter, so daß sie ausgehend von der Position nach Figur 2 um insgesamt 125° verschwenkt sind. Nunmehr kann sich der Führungszapfen 16 relativ frei innerhalb der Kulissenbahn 14 bewegen. Eine sichere Führung der Lamellen 3, 4 ist jedoch durch den Führungszapfen 17 gegeben.

Letztlich ist in Figur 6 die zweite Endposition der Lamellen 3, 4 gezeigt. Sie sind gegenüber Figur 5 um weitere 10° verschwenkt. Das Bedienrad 13 wurde insgesamt um 180° verdreht um den Gesamtschwenkwinkel von 135° der Lamellen 3, 4 zu erreichen. Wäre nur der Führungszapfen 16 vorhanden, wäre auch in dieser Position kein sicherer Halt der Lamellen 3, 4 gegeben. Der zweite Führungszapfen 17 gewährleistet jedoch eine sichere Positionierung der Lamellen 3, 4.

Auf baulich sehr einfache Weise werden zwei Führungszapfen 16, 17 in jeweils einer zugeordneten Kulissenbahn 14, 15 geführt. Befindet sich einer der Führungszapfen 16, 17 in einer nicht exakt definierten Position, wird die Lamellenposition durch den jeweils anderen Führungszapfen 16, 17 garantiert. Dies ist insbesondere dadurch möglich, daß die Kulissenbahnen 14, 15 relativ zueinander um die Achse 12 des Bedienrades 13 verdreht sind und die Führungszapfen 16, 17 seitlich zueinander beabstandet sind. Stünden die Führungszapfen 16, 17 etwa vertikal übereinander, wäre der gewünschte Effekt nicht in diesem Maße erreichbar, da dann bei beiden Kulissenführungen 14, 15 etwa gleiche kinematische Verhältnisse vorliegen würden (kein relatives Verdrehen der Kulissenbahnen um die Achse 12).

Bei der gezeigten Anordnung können unproblematische Schwenkwinkel der Lamellen 3, 4 von mehr als 90° (hier 135°) realisiert werden. Im Beispiel wird die Bewegung vom Bedienrad 13 aus noch untersetzt, d. h. der mögliche Verdrehwinkel des Bedienrades 13 (180°) ist größer als der möglich Schwenkwinkel der Lamellen 3, 4 (135°). So ist eine sehr feinfühlige Einstellung der Lamellen 3, 4 möglich.

## Patentansprüche

1. Düse für Heizungs-/Belüftungs- und/oder Klimaanlagen von Kraftfahrzeugen, mit einem eine Luftaustrittsöffnung (2) bildenden Gehäuse (1) in dem über eine Koppelstange (7) miteinander gelenkig verbundene Lamellen (3, 4) nach Art einer Parallelkurbel gelagert sind, und mit einem als Bedienrad (13) ausgeführten, gehäusefest gelagerten Bedienelement zur Verstellung der Neigung der Lamellen (3, 4), **dadurch gekennzeichnet**, daß in dem Bedienrad (13) zwei Kulissenführungen (14, 15) angeordnet sind, in denen jeweils einer von zwei fest an der Koppelstange (7) angeordneten Führungszapfen (16, 17) geführt ist.

2. Düse nach Anspruch 1, **dadurch gekennzeichnet**, daß die Kulissenführungen (14, 15) im Bedienrad (13) um eine Achse (12) des Bedienrades (13) verdreht zueinander angeordnet sind.

3. Düse nach Anspruch 1 oder 2, **dadurch gekennzeichnet**, daß die Lamellen (3, 4) mittels des Bedienrades (13) um mehr als 90° Grad verschwenkbar sind.

4. Düse nach Anspruch 3, **dadurch gekennzeichnet**, daß der mögliche Verdrehwinkel des Bedienrades (13) größer ist als der Schwenkbereich der Lamellen (3, 4).
